# EUROPEAN PATENT APPLICATION

(11) **EP 1 840 605 A1**
(43) Date of publication of application: **03.10.2007**
(21) Application number: 06711976.8
(22) Date of filing: 19.01.2006
(51) Int. Cl.: G02B 5/30, G02F 1/1335

(54) **METHOD FOR PRODUCING POLARIZING PLATE, POLARIZING PLATE, OPTICAL FILM AND IMAGE DISPLAY EMPLOYING THEM**

(30) Priority: 20.01.2005 JP 2005012352
(71) Applicant: NITTO DENKO CORPORATION, Ibaraki-shi, Osaka 567-8680 (JP)
(72) Inventor: MIZUSHIMA, Hiroaki, baraki-shi, Osaka, 5678680 (JP); SAIKI, Yuuji, baraki-shi, Osaka, 5678680 (JP); KAMEYAMA, Tadayuki, baraki-shi, Osaka, 5678680 (JP); WADA, Morimasa, baraki-shi, Osaka, 5678680 (JP); NAGANO, Shinobu, baraki-shi, Osaka, 5678680 (JP)
(74) Representative: Luderschmidt, Schüler & Partner
(86) International application number: PCT/JP2006/300730
(87) International publication number: WO 2006/077920

(57) **Abstract**

A method of producing a polarizing plate of the present invention comprises the steps of: bonding a protective film to at least one side of a polarizing film that is produced through at least uniaxial stretching and has an absorption axis in the uniaxial stretching direction, and removing by cutting at least one of the edges of the polarizing film that are substantially parallel to the direction of the absorption axis before the bonding the protective film. The method widen the effective width of the polarizing plate, and a large size polarizing plate was obtained.

## Description

### Technical Field

The invention relates to a method of producing a polarizing plate for use in image displays such as liquid crystal displays (LCDs) and electroluminescence displays (ELDs). The invention also relates to a polarizing plate produced by the method, an optical film having the polarizing plate, and an image display having any of them.

### Background Art

Polarizing plates for use in image displays, particularly liquid crystal displays, are required to have high transmittance, high degree of polarization, and in-plane uniformity at the same time in order to provide bright images with good color reproducibility. Such polarizing plates are generally produced by a process including the steps of dyeing a polymer film such as a polyvinyl alcohol (PVA) film with a dichroic material such as iodine and a dichroic dye to form a polarizing film and then bonding, to both sides of the polarizing film, protective films that are each composed of a polymer film such as a triacetyl cellulose (TAC) film.

In recent years, as image displays have been upsized, polarizing plates also need to be upsized. Conventionally, some methods such as using wide raw films (for example, JP-A No. 2002-028939) are attempted to upsize polarizing plates. Only by such methods, however, optical properties can easily vary in the width direction in the conventional process of producing the polarizing film, as compared with the case where the conventional relatively-narrow film is used, so that the area (effective width) available for the production of a high performance polarizing plate can be narrow. Thus, such methods have the problem of interfering with upsizing of polarizing plates.

### Disclosure of Invention

### Problems to be solved by the Invention

In light of the above problems, it is an object of the invention to provide a method of producing a polarizing plate, which includes a polarizing film and a protective film bonded to at least one side of the polarizing film, can widen the effective width and produce a large size polarizing plate. It is another object of the invention to provide a polarizing plate produced by the method, an optical film including the polarizing plate, and an image display including the polarizing plate or the optical film.

### Means for Solving the Problems

As a result of active investigations for solving the above problems, the inventors have found that in a polarizing plate comprising a polarizing film and a protective film bonded thereto, defects such as stripe-like unevenness can easily occur at or near an edge or edges substantially parallel to the direction of the absorption axis of the polarizing plate, namely the direction of uniaxial stretching in the process of manufacturing the polarizing film. The inventors have also found that defects in optical properties can be caused by the stripe-like unevenness formed at the edge as mentioned above, such defects can be caused by a difference between the thicknesses of the central and edge portions along the width direction, which is made by uniaxial stretching in the process of manufacturing the polarizing film, and the defective portion can further extend when a protective film is bonded to such a polarizing film, and have finally completed the invention by finding the method of producing polarizing plates as described below.

The present invention related to a method of producing a polarizing plate, is characterized in that, comprising the steps of:
bonding a protective film to at least one side of a polarizing film that is produced through at least uniaxial stretching and has an absorption axis in the uniaxial stretching direction, and
removing by cutting at least one of the edges of the polarizing film that are substantially parallel to the direction of the absorption axis before the bonding the protective film.

In the method of producing the polarizing film, the width of the polarizing film before removing by cutting of the edge is preferably larger than the width of the protective film to be bonded. If the edge of the polarizing film with a width larger than that of the protective film is removed by cutting, the overall width of the protective film can be more effectively utilized. In this case, in order to produce a large size polarizing plate, a polarizing film having a width of 1300 mm or more before removing by cutting of the edge is preferably used. The width of the polarizing film before removing by cutting of the edge is more preferably 1400 mm or more, still more preferably 1500 mm or more. On the other hand, the upper limit of the width of the polarizing film before removing by cutting of the edge is preferably as high as possible depending on its producibility without particular limitations. An increase in the width may result in an increase in difficulty in transfer, which may lead to a need of an equipment improvement or the like, and thus the width of the polarizing film is generally about 2000 mm or less, more generally about 1700 mm or less.

When the edge of the polarizing film is removed by cutting, the amount of removing by cutting is preferably such that the width of the polarizing film becomes equal to or smaller than the width of the protective film. If the width of the polarizing film after removing by cutting is larger than the width of the protective film, the protruding portion can increase the absorption or volatilization of water to cause defects such as stiffening of the polarizing film.

A removal ratio ((the total of the widths of the removed portions/the overall width of the polarizing film) x 100) in removing by cutting the edge of the polarizing film is preferably from about 1% to about 8%. If the removal ratio is too high, the film can become unnecessarily small so that it can be difficult to produce a large size polarizing plate. If the removal ratio is too low, it can be difficult to produce the removal effect, and defects can occur.

If the polarizing film is produced by dyeing a polyvinyl alcohol film with a dichroic material and uniaxially stretching the film 3 to 7 times, particularly 5.5 to 6.5 times, in the direction of the polarized light-absorbing axis, the invention can be highly effective. If the protective film is a triacetyl cellulose film, the invention can also be highly effective.

According to the invention, the polarizing plate is produced by the method as described above. The effective width of the polarizing plate is preferably 1200 mm or more, more preferably 1400 mm or more. In the effective width is 1400 mm or more, two pieces of 32 inch-size TV polarizing plates (each with a long-side length of about 700 mm) having an absorption axis substantially parallel to the direction of the short side can be produced along the width direction, and thus the effect should be significant for productivity. The upper limit of the effective width of the polarizing plate is not particularly limited as long as it is producible. If the upper limit of the width of the polarizing film is set within the above ranges before removing by cutting of the edge, however, the effective width of the polarizing plate should generally be set at about 1920 mm or less, particularly at about 1620 mm or less. The invention is also related to an optical film including the polarizing plate and an image display including the polarizing plate or the optical film.

### Effects of the Invention

As described above, at least one edge with respect to the direction of the width of the polarizing film is removed by cutting after the preparation of the polarizing film and before the bonding of the protective film, in the method of producing the polarizing plate according to the invention, so that the occurrence of defects at the edge with respect to the direction of the width of the polarizing film can be suppressed. It is on the assumption that the defects which would otherwise be caused by thickness unevenness occurring at the edge of the polarizing film during the bonding is removed before the bonding. Thus the protective film can be free from defects up to the edge in the width direction, so that a large size polarizing plate with a large effective width can be provided. In addition, by the use of the polarizing plate, the area yield with respect to general-purpose sizes (such as a size of 32 inches) can be increased, and larger-sized image displays can be provided.

According to the invention, at least one edge with respect to the direction of the width of the polarizing film is removed by cutting after the preparation of the polarizing film and before the bonding of the protective film, so that a protective film with any necessary width can be used depending on the effective width of the polarizing film. Thus, the amount of the protective film waste can be reduced, and the protective film can be effectively utilized. Conventionally, if the width of the polarizing film is wide, it will be difficult to select or prepare a protective film having a width suitable for the width of the polarizing film. According to the invention, however, it will be easy to select or prepare a suitable protective film depending on the width of the polarizing film. Because of a high occupancy of the protective film in the polarizing plate, the production method of the invention can significantly contribute to the effective use of the protective film and can be significantly effective for environmental protection by reducing wastes.

### Brief Description of Drawing

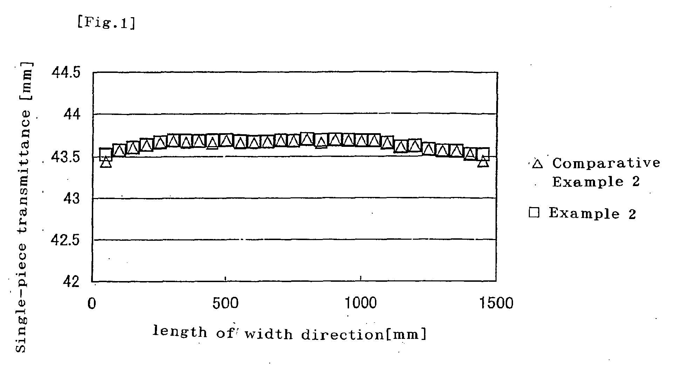

Fig. 1 is a graph showing the relationship between the length in the width direction and the single-piece transmittance with respect to the polarizing plates obtained in Example 2 according to the invention and Comparative Example 2.

### Best Mode for Carrying Out the Invention

The method of producing a polarizing plate according to the invention includes the steps of: removing by cutting at least one edge of a polarizing film that is produced through at least uniaxial stretching and has an absorption axis in the direction of the uniaxial stretching (removing at least one edge substantially parallel to the direction of the absorption axis by cutting) and then bonding a protective film to at least one side of the polarizing film. The removing by cutting of the edge of the polarizing film is performed before the bonding of the protective film to the processed polarizing film, so that the effects of the invention can be obtained. The inventors have found that defects occurring at the edge of the polarizing plate after the bonding of the protective film are due to the fact that the thickness of the polarizing film increases in the width direction as it goes from the central portion to the edge. Accordingly, the invention is based on the finding that adhesion failure can be suppressed during the bonding of the protective film by perform of removing by cutting at least one edge of the polarizing film.

The edge of the polarizing film is preferably removed by cutting in such a manner that the width of the polarizing film becomes equal to or smaller than the width of the protective film to be bonded. If the width of the polarizing film after removing by cutting is larger than that of the protective film, a portion of the polarizing film protruding from the protective film can increase the absorption or volatilization of water. It is not preferred, because it can easily cause defects that can facilitate degradation of the polarizing film or defects that can lead to the contamination of the manufacturing equipment through the protruding polarizing film.

The removal ratio of the edge of the polarizing film to the overall length in the direction of the film width ((the total of the widths of the removed portions/the overall width of the polarizing film) x 100) may be appropriately determined depending on edge defects producible by precise high-ratio stretching of the polarizing film or by any other manufacturing process and depending on the length in the width direction, the optical properties and the state of the edge defect with respect to the resulting polarizing film. In general, however, it is preferably from about 1% to about 8%, more preferably from about 2% to about 7%, optimally from about 5% to about 6%. If the removal ratio is too high, large size polarizing plates cannot be obtained. If the removal ratio is too low, the cause of the defects in the polarizing film as described above cannot be sufficiently removed so that it can be difficult to obtain the effects of the invention.

The removal of the edge of the polarizing film may use any known cutting method with a cutting blade, a laser or the like without limitations. Where the edge is removed by cutting in a series of processes handling a long film, the step of removing by cutting the edge with a cutting blade such as a round blade and a disc blade, depending on the transfer speed of the film is preferably provided. After the cutting, the step of removing the discard or the chip by winding up or sucking is preferably provided. The absence of the step of removing the discard or the chip after the cutting may lead to an adverse effect such as inhibition of transfer of the polarizing film.

As described above, the polarizing film is preferably cut in such a manner that the width of the polarizing film will be equal to or smaller than the width of the protective film to be bonded, after removing by cutting. In terms of effective utilization of the protective film, the width of the polarizing film after removing by cutting is preferably equal to that of the protective film to be bonded. On the other hand, in terms of easy bonding between the polarizing film and the protective film, the width of the polarizing film after removing by cutting is preferably smaller than that of the protective film. However, if the width of the polarizing film after removing by cutting is too smaller than that of the protective film, the protective film cannot be effectively utilized. Therefore, the width of the polarizing film after removing by cutting is preferably 75 mm or less, more preferably 50 mm or less, still more preferably 30 mm or less, yet more preferably 20 mm or less, smaller than that of the protective film. The protective film can be effectively utilized by controlling the width of the polarizing film after removing by cutting and the width of the protective film as described above in combination with the previously described feature (the width of the polarizing film before removing by cutting is preferably larger than that of the protective film).

While the protective film to be bonded to the polarizing film, which aims to protect the polarizing film, may be of any type, it is preferred that the protective film should have good transparency, mechanical strength, thermal stability, isotropy, or the like without particular limitations. The thickness of the protective film to be used is generally 500 µm or less, preferably from about 1 to about 300 µm, more preferably from about 5 to about 100 µm. In terms of improving the polarization properties, durability and adhesion properties, the surface of the protective film may be subjected to surface treatment. For example, the surface of the protective film may be saponified with an alkali solution so that the adhesion properties can be improved.

As materials forming the protective film is not limited, as far as making a polymer film having a transparency, for example, polyester type polymers, such as polyethylene terephthalate and polyethylenenaphthalate; cellulose type polymers, such as diacetyl cellulose and triacetyl cellulose; acrylics type polymer, such as poly methylmethacrylate; styrene type polymers, such as polystyrene and acrylonitrile-styrene copolymer (AS resin); polycarbonate type polymer may be mentioned. Besides, as examples of the polymer forming the protective film, polyolefin type polymers, such as polyethylene, polypropylene, polyolefin that has cyclo- type or norbornene structure, ethylene-propylene copolymer; vinyl chloride type polymer; amide type polymers, such as nylon and aromatic polyamide; imide type polymers; sulfone type polymers; polyether sulfone type polymers; polyether-ether ketone type polymers; poly phenylene sulfide type polymers; vinyl alcohol type polymer; vinylidene chloride type polymers; vinyl butyral type polymers; arylate type polymers; polyoxymethylene type polymers; epoxy type polymers; or blend polymers of the above-mentioned polymers may be mentioned. Moreover, resin films including thermoplastic resins having substituted or non-substituted imido group in sidechain, and thermoplastic resins having substituted or non-substituted phenyl and nitrile group in sidechain may be mentioned. The protective film is formed as a cured layer made of heat curing type or ultraviolet ray curing type resins, such as acryl based, urethane based, acryl urethane based, epoxy based, and silicone based, etc. Particularly preferred are cellulose type polymers which have good adhesive properties or optical properties or polyolefin polymer films which has a cyclo-type or norbornene structure which have good moisture resistance and optical properties.

Where protective films are bonded to both sides of the polarizing film, the protective film bonded to one side may be different in properties from that bonded to the other side. Examples of the properties of the film include water-vapor permeability, thickness, material quality, light transmittance, tensile elasticity, and the presence or absence of an optically functional layer.

The polarizing film and the protective film are preferably bonded together through a pressure-sensitive adhesive layer or an adhesive layer. Any appropriate pressure-sensitive adhesive or adhesive may be used to form the pressure-sensitive adhesive layer or the adhesive layer, depending on the purpose of the layer that is optically transparent when dried. Where the protective film is bonded to the polarizing film, an adhesive is preferably used.

While any adhesive and any bonding method may be used to form the adhesive layer, a vinyl polymer-containing adhesive or the like may be typically used. The adhesive layer comprising such an adhesive may be formed as a dried layer of an aqueous coating solution. In the preparation of the aqueous solution, if necessary, a crosslinking agent or any other additive and a catalyst such as an acid may be added. The vinyl polymer in the adhesive is preferably a polyvinyl alcohol resin. The polyvinyl alcohol resin may also be added a water-soluble crosslinking agent such as a boric acid or borax, glutar aldehyde or melamine, and oxalic acid. Particularly where a polyvinyl alcohol-based polymer film is used as the polarizing film, a polyvinyl alcohol resin-containing adhesive is preferably used in terms of adhesion properties. An adhesive that contains a polyvinyl alcohol resin having an acetoacetyl group is more preferred in terms of improving durability.

While the polyvinyl alcohol resin may be of any type, a polyvinyl alcohol resin with an average degree of polymerization of about 100 to about 3000 and an average degree of saponification of about 85 to about 100% by mole is preferably used in terms of adhesion properties. The concentration of the aqueous adhesive solution is preferably, but not limited to, from 0.1 to 15% by weight, more preferably from 0.5 to 10% by weight. Concerning the thickness of the adhesive layer, it preferably has a post-drying thickness of about 30 to about 1000 nm, more preferably of 50 to 300 nm.

The polarizing film to be used is generally a uniaxially-stretched polymer film, such as a uniaxially-stretched polyvinyl alcohol (PVA) film, dyed with a dichroic material such as iodine and a dichroic dye. The thickness of such a polarizing film to be used is preferably, but not limited to, from about 5 to about 80 µm, particularly preferably 40 µm or less.

Concerning the optical properties of the polarizing film, the single-piece transmittance measured with respect to a single piece of the polarizing film is preferably 43% or more, more preferably in the range of 43.3 to 45.0%. The crossed transmittance may be measured by a process including the steps of providing two pieces of the polarizing films, overlaying the two pieces of polarizing films such that their absorption axes make an angle of 90° with each other, and measuring the transmittance of the overlaid films. The crossed transmittance is preferably as small as possible, and practically, it is preferably from 0.00% to 0.050%, more preferably 0.030% or less. In practice, its degree of polarization is preferably from 99.90% to 100%, particularly preferably from 99.93% to 100%. It is preferred that the polarizing film should also have substantially the same optical properties as the above even when measured in the form of a polarizing plate.

Various types of polymer films that have light-transmitting properties may be used to form the polarizing film without particular limitations. Examples of such polymer films include polyvinyl alcohol (PVA) films, polyethylene terephthalate (PET) films, ethylene-vinyl acetate copolymer films, partially saponified films thereof, hydrophilic polymer films such as cellulose films, and oriented polyene films such as dehydrated products of PVA and dehydrochlorinated products of polyvinyl chloride. In particular, PVA films are preferably used, because they have good dyeing with a dichroic material such as iodine.

The polymer for use as the material for the polymer film generally has a degree of polarization of 500 to 10,000, preferably of 100 to 6,000, more preferably of 1,400 to 4,000. Where a saponified polymer is used, its degree of saponification is preferably from 75 to 100% by mole, more preferably 98% or more by mole, still more preferably from 98.3 to 99.8% by mole, for example, in terms of solubility in water.

Where a PVA film is used as the polymer film, a product prepared by any PVA film forming method such as a flow casting method in which an aqueous or organic solvent solution of raw materials is cast to form a film, a casting method, and an extrusion method may be appropriately used. In this case, the film to be used preferably has a retardation of 5 nm to 100 nm. In order to form a polarizing film with in-plane uniformity, variations in the in-plane retardation of the PVA film is preferably as small as possible and preferably 10 nm or less, more preferably 5 nm or less, at a measurement wavelength of 1000 nm.

General methods for producing the polarizing film may fall roughly into, but are not limited to, a method using dry stretching and a method using wet stretching. The dry stretching method includes stretching under a gaseous atmosphere at high temperature. The wet stretching method includes immersing a film in a liquid to allow it to swell and stretching the film in a liquid.

While the steps for manufacturing the polarizing film by wet stretching may use any appropriate method depending on the conditions, for example, a method of producing it by a series of manufacturing steps including swelling, dyeing, crosslinking, stretching, water-washing, and drying a PVA film is generally used. Except for the drying step, each step may be performed while the film is immersed in a bath including various kinds of solutions. Concerning the steps of swelling, dyeing, crosslinking, stretching, washing with water, and drying, there is no particular limitation on the order of the steps, the number of times of each step, or the presence or absence of each step, and some steps may be simultaneously performed in a single process, or some steps may be omitted. For example, the stretching may be performed after the dyeing or simultaneously with the swelling or the dyeing or may be followed by the dyeing. A method in which the crosslinking is performed before or after the stretching may also be used. Any appropriate technique may be used for the stretching without limitations. In the case of roll stretching, for example, a method in which stretching is achieved through a difference between the peripheral speeds of rolls provided along the film stretching direction may be used. Particularly in the case of roll stretching, it may be difficult to obtain a stretched film with in-plane uniformity, and defects can be easily produced at edge portions substantially parallel to the stretching direction. Such defects tend to be significant as a large-size film is handled. In each step, an additive such as boric acid, borax or potassium iodide may be added as needed. Thus, if necessary, the polarizing film may contain boric acid, zinc sulfate, zinc chloride, potassium iodide, or the like. In some of these processes, stretching may be performed in the flow direction or in the width direction, as needed, and the process of washing with water may be performed at every process.

For example, the swelling step includes immersing the polymer film in a treatment bath (a swelling bath) filled with water. In this step, the polymer film is washed with water so that the surface of the polymer film can be cleaned of dirt or an anti-blocking agent, and the polymer film is allowed to swell so that it can be expected that the non-uniform state of the film such as unevenness will be effectively alleviated. Glycerin, potassium iodide or the like may be added to the swelling bath as needed. Concerning the concentration of the additive, glycerin is preferably added at a concentration of 5% by weight or less, and potassium iodide is preferably added at a concentration of 10% by weight or less. The temperature of the swelling bath may be from about 20 to about 45°C. The time period of immersion in the swelling bath may be from about 2 to about 180 seconds, more preferably from 60 to 150 seconds for the production of a wide film, because the final width of the film can be controlled to some extent by the immersing time. The polymer film may be stretched in the swelling bath, and in such a process, the stretch ratio is from about 1.1 to about 3.5 times.

For example, the dyeing step may include a method of dyeing the polymer film by immersing it in a treatment bath (a dyeing bath) containing a dichroic material such as iodine. Any known conventional dichroic material such as iodine and a dichroic dye may be used. Examples of applicable dichroic dyes include Red BR, Red LR, Red R, Pink LB, Rubin BL, Bordeaux GS, Sky Blue LG, Lemon Yellow, Blue BR, Blue 2R, Navy RY, Green LG, Violet LB, Violet B, Black H, Black B, Black GSP, Yellow 3G, Yellow R, Orange LR, Orange 3R, Scarlet GL, Scarlet KGL, Congo Red, Brilliant Violet BK, Supra Blue G, Supra Blue GL, Supra Orange GL, Direct Sky Blue, Direct Fast Orange S, and Fast Black. One or more of these dichroic materials may be used alone or in any combination. Particularly in the invention, iodine is preferably used, because it has good optical properties such as polarization degree and can easily produce a durability-enhancing effect according to the invention.

A solution of the dichroic material in a solvent may be used for the dyeing bath solution. While water such as pure water is generally used as the solvent, an organic solvent compatible with water may further be added. The concentration of the dichroic material is from about 0.010 to about 10% by weight. The time period of the immersion of the polymer film in the dyeing bath may be, but not limited to, about 0.5 to about 20 minutes, and the dyeing bath temperature may be from about 5 to about 42°C. The polymer film may be stretched in the dyeing bath, and the total stretch ratio added up together with the stretch ratios in the previous process may be from about 1.1 to about 3.5 times.

Where iodine is used as the dichroic material, an iodide is preferably further added to the dyeing bath, because it can further improve the dyeing efficiency. Examples of the iodide include potassium iodide, lithium iodide, sodium iodide, zinc iodide, aluminum iodide, lead iodide, copper iodide, barium iodide, calcium iodide, tin iodide, and titanium iodide. The content of any of these iodides in the dyeing bath may be from about 0.010 to about 10% by weight. In particular, potassium iodide is preferably added, and the ratio (weight ratio) of iodine to potassium iodide is preferably in the range of 1:5 to 1:100. For the purpose of improving the in-plane uniformity of the film, a crosslinking agent such as a boron compound may be added as needed.

Besides the method of immersing in the dyeing bath as mentioned above, for example, the dyeing process may be a method of applying or spraying a dichroic material-containing aqueous solution onto the polymer film or a method of premixing a dichroic material in the process of forming the polymer film.

In the crosslinking step, for example, the polymer film is immersed in a treatment bath (a crosslinking bath) containing a crosslinking agent. Any known conventional material may be used as the crosslinking agent. Examples thereof include boron compounds such as boric acid and borax, glyoxal, and glutar aldehyde. One or more of these materials may be used alone or in any combination. Where two or more are used in combination, for example, the combination of boric acid and borax is preferred, and the content ratio (molar ratio) of boric acid to borax is may be from about 4:6 to about 9:1. While water such as pure water is generally used as a solvent of the crosslinking bath, the crosslinking bath may contain an organic solvent compatible with water. The concentration of the crosslinking agent in the crosslinking bath may be about 1 to about 10% by weight.

An iodide may be added to the crosslinking bath, because it can impart uniform in-plane properties to the polarizing film. Examples of the iodide include potassium iodide, lithium iodide, sodium iodide, zinc iodide, aluminum iodide, lead iodide, copper iodide, barium iodide, calcium iodide, tin iodide, and titanium iodide. The content of the iodide is preferably from 0.05 to 15% by weight, more preferably from 0.5 to 8% by weight. In particular, the combination of boric acid and potassium iodide is preferred, and the ratio (weight ratio) of boric acid to potassium iodide is preferably in the range of 1:0.1 to 1:3.5, more preferably in the range of 1:0.5 to 1:2.5. The temperature of the crosslinking bath is generally from 20 to 70°C, and the immersion time is generally from about 1 second to about 15 minutes. Similarly to the dyeing process, the crosslinking process may also use a method of applying or spraying a crosslinking agent-containing solution, or the crosslinking process may be performed simultaneously with the stretching process. In this case, the total stretch ratio may be from about 1.1 to about 3.5 times.

In the step of stretching by a wet stretching method, the film may be stretched to a total stretch ratio of about 3 to about 7 times while immersed in a treatment bath (a stretching bath). A solution prepared by adding any of various metal salts or a compound of iodine, boron or zinc to a solvent such as water, ethanol or various organic solvents is preferably used as the solution for the stretching bath. In particular, a solution containing about 2 to about 18% by weight of each of boric acid and/or potassium iodide is preferably used. Where boric acid and potassium iodide are used at the same time, the content ratio (weight ratio) of boric acid to potassium iodide is preferably from about 1:0.1 to about 1:4. The temperature of the stretching bath is preferably from about 40 to about 67°C.

In the step of washing with water, for example, the polymer film is immersed in a treatment bath (a water-washing bath) so that unnecessary residues, such as boric acid, deposited in the previous process can be washed out. An iodide may be added to the aqueous solution, and, for example, sodium iodide or potassium iodide is preferably used. The temperature of the water-washing bath may be from about 10 to about 60°C. The number of times of the water-washing process is not particularly limited. The water-washing process may be performed plural times, and it is preferred that the type and concentration of the additive in each water-washing bath be adjusted as needed.

When the polymer film is raised from each treatment bath, for the purpose of preventing dripping, a draining roll such as a known conventional pinch roll may be used or excess water may be removed by a method of scraping off the liquid with an air knife, or the like.

The drying step may use any known conventional drying method such as natural drying, blow drying, and drying by heating. For example, in the drying by heating, the heating temperature may be from about 20 to about 80°C, and the drying time may be from about 1 to about 10 minutes. In the drying step, stretching may also be performed as needed.

With respect to the polarizing film prepared through the respective steps as described above, the resulting stretch ratio (the total stretch ratio) in the direction of the polarized light-absorbing axis is preferably from 3.0 to 7.0 times, more preferably from 5.5 to 6.5 times. If the total stretch ratio is less than 3.0, it can be difficult to obtain a polarizing film with a high degree of polarization. Concerning the polarizing film prepared by the above method, as the total stretch ratio increases, the production of a polarizing film with a high degree of polarization becomes easy. However, if the total stretch ratio exceeds 7.0, the film can easily be broken. The overall width and effective width of the polarizing film may vary with the details of the process of manufacturing the polarizing film. For example, in the manufacturing process by the wet stretching method as described above, the width should be appropriately adjusted depending on the conditions for the swelling of the film, the stretch ratio in each step and the total stretch ratio, or the conditions and method for drying.

The method of producing the polarizing film is not limited to the above method, and any other method may be used to produce the polarizing film. For example, the polarizing film may be produced by a dry stretching method or by kneading a polymer film material, such as polyethylene terephthalate (PET), with a dichroic material, forming the mixture into a film and stretching the film. The polarizing film may also be an O-type film comprising a uniaxially oriented liquid crystal as a host to which a dichroic dye is added as a guest (U.S. Patent No. 5,523,863 and JP-A No.03-503322) or an E-type film using a dichroic lyotropic liquid crystal or the like (U.S. Patent No. 6,049,428).

The polarizing plate and at least one of a variety of optically functional layers may be laminated to form a laminate for use as an optical film. Any known optically functional layer that can produce an advantageous effect in combination with the polarizing plate may be used as needed. Examples of the optically functional layer include a surface treatment layer such as a hard coat layer, an antireflection layer, an sticking prevention layer, a diffusing layer, or an antiglare layer, an aligned liquid crystal layer for viewing angle compensation, optical compensation or the like, and a pressure-sensitive adhesive layer or an adhesive layer comprising a pressure-sensitive adhesive or an adhesive for stacking of any other film. Further, one layer or two layers or more of optical layers, which may be used for formation of an image display etc., such as a polarization conversion element, a reflector, a transflective plate, a retardation plate (a half wavelength plate and a quarter wavelength plate included), and a viewing angle compensation film, brightness enhancement film, may be used. Especially preferable polarizing plates are; a reflection type polarizing plate or a transflective type polarizing plate in which a reflector or a transflective reflector is further laminated onto a polarizing plate of the present invention; an elliptically polarizing plate or a circular polarizing plate in which a retardation plate is further laminated onto the polarizing plate; a wide viewing angle polarizing plate in which a viewing angle compensation layer or a viewing angle compensation film is further laminated onto the polarizing plate; or a polarizing plate in which a brightness enhancement film is further laminated onto the polarizing plate.

For example, a hard coat processing is applied for the purpose of protecting the surface of the polarizing plate from damage, and this hard coat layer may be formed by a method in which, for example, a curable coated film with excellent hardness, slide property etc. is added on the surface of the protective film using suitable ultraviolet curable type resins, such as acrylic type and silicone type resins. Antireflection processing is applied for the purpose of antireflection of outdoor daylight on the surface of a polarizing plate and it may be prepared by forming an antireflection film according to the conventional method etc. Besides, a sticking prevention processing is applied for the purpose of adherence prevention with adjoining layer.

Antiglare processing is applied in order to prevent a disadvantage that outdoor daylight reflects on the surface of a polarizing plate to disturb visual recognition of transmitting light through the polarizing plate, and the processing may be applied, for example, by giving a fine concavo-convex structure to a surface of the protective film using, for example, a suitable method, such as rough surfacing treatment method by sandblasting or embossing and a method of combining transparent fine particle. As a fine particle combined in order to form a fine concavo-convex structure on the above-mentioned surface, transparent fine particles whose average particle size is 0.5 to 50 µm, for example, such as inorganic type fine particles that may have conductivity comprising silica, alumina, titania, zirconia, tin oxides, indium oxides, cadmium oxides, antimony oxides, etc., and organic type fine particles comprising cross-linked of non-cross-linked polymers may be used. When forming fine concavo-convex structure on the surface, the amount of fine particle used is usually about 2 to 70 weight parts to the transparent resin 100 weight parts that forms the fine concavo-convex structure on the surface. An antiglare layer may serve as a diffusion layer (viewing angle expanding function etc.) for diffusing transmitting light through the polarizing plate and expanding a viewing angle etc.

In addition, the optical layers, such as the antireflection layer, sticking prevention layer, diffusion layer, antiglare layer, etc., may be prepared directly on the polarizing plate itself, and also they may be prepared as an optical layer different from the polarizing plate.

A reflective layer is prepared on a polarizing plate to give a reflection type polarizing plate, and this type of plate is used for a liquid crystal display in which an incident light from a view side (display side) is reflected to give a display. The transflective type polarizing plate may be obtained by preparing the above-mentioned reflective layer as a transflective type reflective layer, such as a half-mirror etc. that reflects and transmits light. A transflective type polarizing plate is usually prepared in the backside of a liquid crystal cell and it may form a liquid crystal display unit of a type in which a picture is displayed by an incident light reflected from a view side (display side) when used in a comparatively well-lighted atmosphere. And this unit displays a picture, in a comparatively dark atmosphere, using embedded type light sources, such as a back light built in backside of a transflective type polarizing plate.

The elliptically polarizing plate or circularly polarizing plate on which the retardation plate is laminated on the polarizing plate is used to change linearly polarized light into elliptically polarized light or circularly polarized light, elliptically polarized light or circularly polarized light into linearly polarized light or change the polarization direction of linearly polarization. For example, elliptically polarizing plate is effectively used to give a monochrome display without above-mentioned coloring by compensating (preventing) coloring (blue or yellow color) produced by birefringence of a liquid crystal layer of a super twisted nematic (STN) type liquid crystal display. Examples of the retardation plate include a birefringent film produced by uniaxially or biaxially stretching a polymer film such as a polyolefin or polycarbonate film, an oriented film produced by aligning a liquid crystal monomer and then crosslinking and polymerizing the monomer, an oriented liquid-crystal polymer film, and an oriented liquid-crystal polymer layer supported on a film.

A viewing angle compensation film is a film for extending viewing angle so that a picture may look comparatively clearly, even when it is viewed from an oblique direction not from vertical direction to a screen. For example, the polarization conversion element may be an anisotropic reflection-type polarizing element or an anisotropic diffusion-type polarizing element. Examples thereof include PCF series manufactured by NITTO DENKO CORPORATION, DBEF series manufactured by 3M, Micro Wires manufactured by Moxtek Incorporated., and DRPF manufactured by 3M.

The polarizing plate with which a polarizing plate and a brightness enhancement film are adhered together is usually used being prepared in a backside of a liquid crystal cell. A brightness enhancement film does not enter the light with the polarizing direction absorbed by the polarizing film into the polarizing film but reflects the light once by the brightness enhancement film and further makes the light reversed through the reflective layer etc. prepared in the backside to re-enter the light into the brightness enhancement film. By this above-mentioned repeated operation, only when the polarization direction of the light reflected and reversed between the both becomes to have the polarization direction which may pass a polarizer, the brightness enhancement film transmits the light to supply it to the polarizing film. As a result, the light from a backlight may be efficiently used for the display of the picture of a liquid crystal display to obtain a bright screen.

Although an optical film with the above described optical functional layer laminated to the polarizing plate may be formed by a method in which laminating is separately carried out sequentially in manufacturing process of a liquid crystal display etc., an optical film in a form of being laminated beforehand has an outstanding advantage that it has excellent stability in quality and assembly workability, etc., and thus manufacturing processes ability of a liquid crystal display etc. may be raised. Proper adhesion means, such as an adhesive layer, may be used for laminating. On the occasion of adhesion of the above described polarizing plate and other optical functional layer, the optical axis may be set as a suitable configuration angle according to the target retardation characteristics etc.

A pressure-sensitive adhesive layer or an adhesive layer for bonding to any other component such as a liquid crystal cell may be formed on the polarizing plate or the optical film. While the pressure-sensitive adhesive layer or the adhesive layer is not particularly limited, a pressure-sensitive adhesive layer comprising a pressure-sensitive adhesive is preferably used depending on the requirements such as reworking. The pressure-sensitive adhesive layer may be formed of any known transparent pressure-sensitive adhesive such as an acrylic, silicone, polyester, polyurethane, polyether, or rubber pressure-sensitive adhesive. An acrylic pressure-sensitive adhesive is preferably applied to the polarizing plate or the optical film. In this case, the thickness of the pressure-sensitive adhesive layer comprising a pressure-sensitive adhesive is generally, but not limited to, from about 1 to about 500 µm, preferably from 5 to 200 µm, more preferably from 10 to 100 µm. If the thickness of the pressure-sensitive adhesive layer is set within the ranges, the stress associated with the behavior of the sizes of the polarizing film and the polarizing plate can be relaxed.

The polarizing plate according to the present invention is preferably used to form an image display such as a liquid crystal display (LCD), an electroluminescence display (ELD), and a plasma display.

The polarizing plate is preferably used to form a liquid crystal display or the like. For example, the polarizing plate may be used for liquid crystal displays, such as reflective, transflective or hybrid transmissive /reflective liquid crystal displays, which comprise a liquid crystal cell and the polarizing plate placed on one side or both sides of the liquid crystal cell. The liquid crystal cell substrate may be any of a plastic substrate and a glass substrate. The liquid crystal display may use any appropriate type of liquid crystal cell such as an active matrix driving type such as a thin-film transistor type; and a simple matrix driving type such as a twisted nematic type and a super twisted nematic type.

If the polarizing plates or the optical films are placed on both sides of the liquid crystal cell, they may be the same or different. Additionally, any other appropriate component(s) such as a prism array sheet, a lens array sheet, a light diffusion plate, and a backlight may also be placed in one or more layers at an appropriate position(s) to form the liquid crystal display.

The polarizing plate may be applied to an organic electroluminescence display (organic EL display). In this case, an organic EL display containing an organic EL light emitter may include: an organic light-emitting layer that emits light when a voltage is applied; a transparent electrode provided on the front side of the organic light-emitting layer; a metal electrode provided on the rear side of the organic light-emitting layer; and the polarizing plate provided on the front side of the transparent electrode. In this structure, the polarizing plate has the function of polarizing a light beam that comes from outside and is reflected from the metal electrode so that the light beam produced by mirror reflection from the metal electrode can be effectively blocked from external view by the polarization function.

### Examples

The invention is more specifically described using the examples and the comparative examples below, which are not intended to limit the scope of the invention.

### Example 1

An 80 µm-thick polyvinyl alcohol (PVA) film (2400 in degree of polymerization, manufactured by Kuraray Co., Ltd.) with a length of 2700 mm in its width direction was used. While kept under a tension, the PVA film was immersed in pure water at 30°C for 60 seconds, and stretched to a ratio of 3 times in an aqueous 0.3% by weight iodine solution at 30°C. The PVA film was then stretched in an aqueous solution of 4% by weight boric acid and 3% by weight potassium iodide at 60°C in such a manner that the total stretch ratio reached 6 times. The stretched PVA film was immersed in an aqueous 3.5% by weight potassium iodide solution at 30°C for 10 seconds and then dried at 30°C for four minutes while the tension of the film was maintained, so that a polarizing film having a length of 1340 mm in its width direction was obtained. A 40 mm-wide edge portion was removed by cutting from each of both edges of the resulting polarizing film with respect to the width direction, so that a polarizing film having a length of 1260 mm in its width direction was obtained. After removing by cutting, triacetyl cellulose (TAC) films (TDY80UL manufactured by Fuji Photo Film Co., Ltd.) each with a length of 1330 mm in the width direction were bonded to both sides of the polarizing film by the use of an adhesive mainly composed of an aqueous solution of 5% completely saponified polyvinyl alcohol. The resulting laminate was dried at 70°C for four minutes to give a polarizing plate.

### Example 2

A polarizing film having a length of 1540 mm in its width direction was prepared using the process of Example 1 except that a 75 µm-thick polyvinyl alcohol (PVA) film (2400 in degree of polymerization, manufactured by Kuraray Co., Ltd.) with a length of 3100 mm in its width direction was alternatively used. A 40 mm-wide edge portion was removed by cutting from each of both edges of the resulting polarizing film with respect to the width direction, so that a polarizing film having a length of 1460 mm in its width direction was obtained. After removing by cutting, triacetyl cellulose (TAC) films (TDY80UL manufactured by Fuji Photo Film Co., Ltd.) each with a length of 1475 mm in the width direction were bonded to both sides of the polarizing film by the use of an adhesive mainly composed of an aqueous solution of 5% completely saponified polyvinyl alcohol. The resulting laminate was dried at 70°C for four minutes to give a polarizing plate.

### Comparative Example 1

A polarizing film having a length of 1266 mm in its width direction was prepared using the process of Example 1 except that an 80 µm-thick polyvinyl alcohol (PVA) film (2400 in degree of polymerization, manufactured by Kuraray Co., Ltd.) with a length of 2550 mm in its width direction was alternatively used. A polarizing plate was prepared by bonding the TAC films to both sides of the resulting polarizing film similarly to Example 1, except that no edge was removed by cutting of the polarizing film.

### Comparative Example 2

A polarizing film having a length of 1464 mm in its width direction was prepared using the process of Example 2 except that an 80 µm-thick polyvinyl alcohol (PVA) film (2400 in degree of polymerization, manufactured by Kuraray Co., Ltd.) with a length of 2950 mm in its width direction was alternatively used. A polarizing plate was prepared by bonding the TAC films to both sides of the resulting polarizing film similarly to Example 2, except that no edge was removed by cutting of the polarizing film.

### Comparative Example 3

A polarizing film having a length of 1464 mm in its width direction was prepared using the process of Example 1 except that an 80 µm-thick polyvinyl alcohol (PVA) film (2400 in degree of polymerization, manufactured by Kuraray Co., Ltd.) with a length of 2950 mm in its width direction was alternatively used. A polarizing plate was prepared by bonding the TAC films to both sides of the resulting polarizing film similarly to Example 1, except that no edge was removed by cutting of the polarizing film. Immediately after the bonding, however, separation or peeling of the TAC film occurred at the edge, and the roll for transferring the film was contaminated due to the protrusion of the polarizing film, so that no effective polarizing plate was obtained.

### (Evaluation)

The polarizing plates obtained in the examples and the comparative examples were evaluated as described below. The results are shown in Table 1.

### (Effective Width)

The evaluation of the effective width (mm) included the steps of evaluating a laminate, that is a commercial grade of polarizing plate (an upper plate)/a VA mode liquid crystal cell/the polarizing plate to be evaluated (a lower plate)/a backlight (5000 cd/m² in brightness), for the presence or absence of unevenness and determining the effective width from the portion where no visible unevenness was observed. When the effective width was determined, the polarizing plate to be evaluated was cut into pieces each having an appropriate size for the above structure for the evaluation with respect to the overall width of the polarizing plate, and an exchange of the pieces of the polarizing plate to be evaluated (lower plates) was performed twice or more.

**Table 1**

| | PVA Width (mm) | Polarizing Film | | | | Protective Film Width (mm) | Effective Width of Polarizing Plate (mm) |
|---|---|---|---|---|---|---|---|
| | | Width before Cutting (mm) | Cut Width (Each Side) (mm) | Removal Ratio (%) | Width after Cutting (mm) | | |
| Example 1 | 2700 | 1340 | 40 | 5.97 | 1260 | 1330 | 1240 |
| Example 2 | 3100 | 1540 | 40 | 5.19 | 1460 | 1475 | 1440 |
| Comparative Example 1 | 2550 | 1266 | 0 | 0.00 | 1266 | 1330 | 1166 |
| Comparative Example 2 | 2950 | 1464 | 0 | 0.00 | 1464 | 1475 | 1360 |

From the results of the examples and the comparative examples, it is apparent that the step of removing by cutting the edge of the polarizing film before the bonding of the protective film can prevent defects which would otherwise occur when a wide polarizing plate is prepared as shown in Comparative Example 2. Also as shown in Example 1 and Comparative Example 1, the effective width of the resulting polarizing plate is significantly larger in the case where the edge is removed by cutting before the bonding than in the case where the edge is removed by cutting after the bonding.

The polarizing plates obtained in Example 2 and Comparative Example 2 were each measured for single-piece transmittance at each position along the width direction. The results of the measurement are shown in Fig. 1. The single-piece transmittance was measured with a spectrophotometer (U-4100 manufactured by Hitachi, Ltd.) equipped with an integrating sphere. From the results of Fig. 1, it is also recognized that the single-piece transmittance is significantly reduced at the edge portion in Comparative Example 2 and that the effective width is larger in Example 2 than in Comparative Example 2. In the case where no edge is removed by cutting, the single-piece transmittance also tends to vary at or near the center. When the transmittance was measured with respect to each linearly polarized light, completely polarized light obtained through a Glan-Thomson Prism polarizer was defined as being 100%. The transmittance was expressed in a Y value that was calculated based on the CIE 1931 color system and corrected for luminosity. The single-piece transmittance T was calculated according to the formula: T=(k₁+k₂)/2, wherein k₁ represents a transmittance for linearly polarized light in a maximum transmission direction, and k₂ represents a transmittance for linearly polarized light in a direction perpendicular thereto.

### Industrial Applicability

The polarizing plate obtained by the production method of the present invention or the optical film using the polarizing plate is applicable to image displays such as liquid crystal displays (LCDs) and electroluminescence displays (ELDs).

## Claims

1. A method of producing a polarizing plate, comprising the steps of:
bonding a protective film to at least one side of a polarizing film that is produced through at least uniaxial stretching and has an absorption axis in the uniaxial stretching direction, and
removing by cutting at least one of the edges of the polarizing film that are substantially parallel to the direction of the absorption axis before the bonding the protective film.

2. The method according to Claim 1, wherein the polarizing film before removing by cutting has a width larger than that of the protective film to be bonded.

3. The method according to Claim 1, wherein the polarizing film before removing by cutting has a width of 1300 mm or more.

4. The method according to Claim 1, wherein the polarizing film has a width equal to or smaller than that of the protective film after removing by cutting.

5. The method according to Claim 1, wherein a removal ratio ((the total of the widths of the removed portions/the overall width of the polarizing film) x 100) in removing by cutting the edge of the polarizing film is from 1% to 8%.

6. The method according to Claim 1, wherein the polarizing film is produced by dyeing a polyvinyl alcohol film with a dichroic material and uniaxially stretching the film 3 to 7 times in the direction of the polarized light-absorbing axis.

7. The method according to Claim 1, wherein the protective film is a triacetyl cellulose film.

8. The method according to Claim 1, wherein the polarizing plate has an effective width of 1200 mm or more.

9. A polarizing plate produced by the method according to any one of Claims 1 to 8.

10. The polarizing plate according to Claim 9, wherein it has an effective width of 1200 mm or more.

11. An optical film, comprising the polarizing plate according to Claim 9.

12. An image display, comprising the polarizing plate according to Claim 9.

13. An image display, comprising the optical film according to Claim 11.
